# EUROPEAN PATENT SPECIFICATION

(11) **EP 4 144 991 B1**
(45) Date of publication and mention of the grant of the patent: **29.11.2023**
(21) Application number: 20941421.8
(22) Date of filing: 17.06.2020
(51) Int. Cl.: F04C 11/00, F04C 15/00, F04C 2/08, F16H 57/04, F04C 2/10, F04C 14/28

(54) **AUTOMATIC TRANSMISSION AND VEHICLE**
AUTOMATIKGETRIEBE UND FAHRZEUG
BOÎTE DE VITESSES AUTOMATIQUE ET VÉHICULE

(43) Date of publication of application: 08.03.2023
(73) Proprietor: Ningbo Upper Middle and Lower Automatic Transmission Co., Ltd, Zhejiang 315800 (CN); Zhejiang Geely Holding Group Co., Ltd., Hangzhou, Zhejiang 310051 (CN)
(72) Inventor: MA, Yuanming, Zhejiang 315336 (CN); MAO, Yongjiu, Zhejiang 315336 (CN); WU, Bixin, Zhejiang 315336 (CN); ZHANG, Yan, Zhejiang 315336 (CN); LIN, Xiaozhe, Zhejiang 315336 (CN)
(74) Representative: Ziebig Hengelhaupt Intellectual Property Attorneys Patentanwaltskanzlei PartGmbB
(86) International application number: PCT/CN2020/096648
(87) International publication number: WO 2021/253297

(56) References cited:
- CN-A- 101 495 783
- CN-A- 102 146 917
- CN-A- 107 448 382
- CN-A- 108 779 773
- CN-U- 203 308 705
- DE-A1-102007 004 964
- JP-A- S63 246 557
- JP-B2- 3 576 370
- JP-B2- 3 953 828
- JP-B2- H0 526 059
- US-B1- 6 227 333

## Description

### FIELD OF THE INVENTION

The present invention relates to the technical field of automobile transmission, and in particular to an automatic transmission comprising an oil pump gas-exhaust mechanism and a vehicle.

### BACKGROUND OF THE INVENTION

A transmission (also known as a gear box) is a component of an automobile, and is divided into a manual transmission and an automatic transmission. The manual transmission is mainly composed of gears and shafts, and speed change and torque conversion are generated by means of different gear combinations; while the automatic transmission is composed of a hydraulic torque converter, planet gears, and a hydraulic control system, and the speed change and torque conversion are achieved by means of hydraulic transmission and the gear combinations. Main functions of the transmission are: first, changing a transmission ratio; second, enabling the automobile to travel backwards when a rotation direction of an engine remains unchanged; and third, interrupting power transmission by using neutral gear, so as to enable the engine to start and idle, and facilitate gear shifting or power output of the transmission. At present, with the development of the automobile industry, the automatic transmission has become a development trend. An oil pump for the automatic transmission, as a power source of a clutch system of the automatic transmission and each friction pair lubrication device inside the gear box, is an important portion of the automatic transmission and one of key components related to the performances of power, economy and comfort of the automobile. The influence of the oil pump for the automatic transmission on fuel consumption, performance, and price of a whole vehicle cannot be underestimated. For instance, Document DE 102007004964A1 discloses a gearbox with a lubricating oil pump, the pump being driven directly via a gearbox shaft and connected to an oil circuit pipe arranged inside the gearbox. The pump can be operated in the opposite direction to the direction of rotation and can be mounted on different sides of the transmission. The pump is connected to a distributor on which at least one first sensor is provided. The gearbox further comprises an oil pump gas-exhaust mechanism with an exhaust hole.

JPS 63246557A discloses an automatic transmission with a pump and a pump gas-exhaust mechanism comprising an exhaust hole, the pump being fixedly connected to the transmission case.

A working principle of the oil pump for the automatic transmission is that engaging rotor assemblies of the oil pump rotate, and a fluid is sucked and discharged by changing a volume formed by engaging rotors and a housing having a suction port and a discharging port. Based on the structure of a rotor of the oil pump, the oil pump for the automatic transmission is divided into two types: an external gear pump and an internal gear pump. The external gear pump has some disadvantages, such as a high flow pulsation rate, loud noise, and serious oil trapping. Therefore, in order to improve the performance of noise, vibration, and harshness (NVH) of the transmission and make the structure more compact, an internal gear electronic oil pump is often used by the automatic transmission. The internal gear electronic oil pump has the advantages of a compact structure, a strong self-priming capability, a small flow fluctuation, and low noise. Because the transmission is exposed at the bottom of a vehicle, there is a risk of water entering the electronic oil pump when the whole vehicle is not protected by a bottom protective plate, and the vehicle travels to a wading road or there is water splashing on the road, which may affect normal working of the electronic oil pump.

Therefore, it is necessary to propose an oil pump gas-exhaust mechanism for an automatic transmission, an automatic transmission and a vehicle to solve the above technical problem.

### BRIEF DESCRIPTION OF THE INVENTION

The purpose of the present invention is to provide an automatic transmission comprising an oil pump gas-exhaust mechanism and a vehicle. An inclined gas exhaust hole is arranged on a sensor plug-in assembly, so that water splashing into an electronic oil pump can be avoided when a vehicle is wading, thus ensuring normal working of the oil pump when the vehicle is in a working condition involving wading.

The present application is defined by the independent claim 1. Preferred embodiments are defined by the dependent claims 2 through 9.

Accordingly, the present invention provides an automatic transmission including the oil pump gas-exhaust mechanism for an automatic transmission.

Accordingly, the present invention further provides a vehicle including the automatic transmission.

Implementing the technical solutions of the present invention has the following beneficial effects:
1. according to the automatic transmission and the vehicle of the present invention, the gas exhaust hole is provided on the sensor plug-in assembly, and the exhaust hole is arranged as an inclined hole inclined upwards relative to the ground direction. On the one hand, the pressure generated during the working of the oil pump can be ensured to be discharged by means of the gas exhaust hole. On the other hand, when the vehicle is driven in a working condition involving wading or there is water splashing on the ground, the oil pump for the automatic transmission avoids an active "water retention" phenomenon due to the gravity of water droplets, so that water or other foreign matters can be prevented from splashing into the electronic oil pump when the vehicle is wading, thereby ensuring the normal working of the oil pump when the vehicle is in the working condition involving wading; and
2. according to the automatic transmission and the vehicle of the present invention, the waterproof base membrane arranged at a hole port inside the sensor plug-in assembly ensures that heat generated by the working of the oil pump can be discharged, and a situation in which water is forced to flow back into the electronic oil pump when undergoing serious wading can also be avoided, so that the inclined gas exhaust hole and the waterproof base membrane achieve a double protection effect for the electronic oil pump when the vehicle is in a traveling condition involving serious wading.

### BRIEF DESCRIPTION OF THE DRAWINGS

In order to more clearly illustrate the technical solutions and advantages of the embodiments of the present invention or the prior art, the accompanying drawings required in the descriptions of the embodiments or the prior art will be briefly introduced below. Apparently, the accompanying drawings in the following descriptions are only some embodiments of the present invention, and those of ordinary skill in the art may still obtain other drawings from these drawings without creative efforts.
FIG. 1 is a schematic structural diagram of an oil pump gas-exhaust mechanism for an automatic transmission according to an embodiment of the present invention;
FIG. 2 is a schematic diagram of a distance from an outlet end of a gas exhaust hole to a joint surface according to an embodiment of the present invention;
FIG. 3 is a schematic structural diagram of a gas exhaust hole according to an embodiment of the present invention; and
FIG. 4 is a schematic cross-sectional view of a gas exhaust hole according to an embodiment of the present invention.

The reference numerals in the figures correspond to: 1-joint surface, 2-gas exhaust hole, 3-sensor plug-in assembly, 4-waterproof base membrane, and L-distance from an outlet end of the gas exhaust hole to the joint surface.

### DETAILED DESCRIPTION

To clarify the purpose, technical solutions and advantages of the present invention, the present invention will be further described in detail below with reference to the accompanying drawings. Apparently, the described embodiments are only part rather than all of the embodiments of the present invention.

In the description of the present invention, unless otherwise specified and limited, the terms "connected", "connection", etc. should be understood broadly. For example, the "connection" may be a fixed connection, a detachable connection, or an integrated connection, may be a mechanical connection or an electrical connection, may be a direct connection or an indirect connection by means of an intermediate medium, or may be an internal connection of two elements or an interaction between two elements. For those of ordinary skill in the art, the specific meaning of the terms in the present invention may be understood according to specific situations.

### EMBODIMENTS

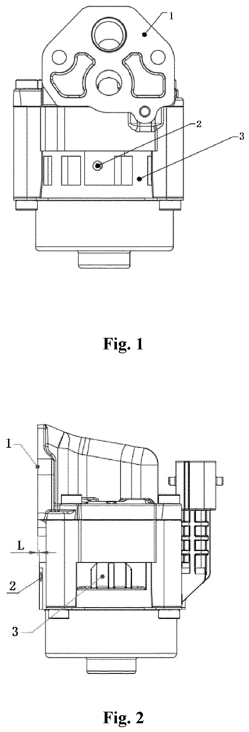

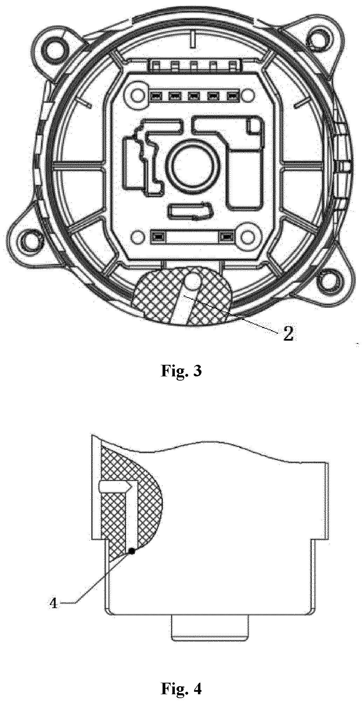

The embodiment provides an an automatic transmission comprising an oil pump gas-exhaust mechanism. With reference to FIGS. 1-4, the oil pump gas-exhaust mechanism for an automatic transmission in this embodiment includes a sensor plug-in assembly 3 and an oil pump for supplying oil to the automatic transmission; the oil pump is fixedly connected to a transmission case, the sensor plug-in assembly 3 is arranged on a housing of the oil pump, and the sensor plug-in assembly 3 is used to be electrically connected to a sensor; and a gas exhaust hole 2 is provided on the sensor plug-in assembly 3, the gas exhaust hole 2 is located between the oil pump and the transmission, the gas exhaust hole 2 is an inclined hole, and the gas exhaust hole 2 is inclined upwards from an outlet end relative to a horizontal plane.

According to the automatic transmission in this embodiment, the gas exhaust hole 2 is provided on the sensor plug-in assembly 3, and to facilitate a hole opening design, the exhaust hole 2 is arranged as the inclined hole inclined upwards relative to a direction of the horizontal plane. On the one hand, the pressure generated during the working of the oil pump can be ensured to be discharged by means of the gas exhaust hole. On the other hand, when a vehicle is driven in a working condition involving wading or there is water splashing on the ground, the oil pump for the automatic transmission avoids an active "water retention" phenomenon due to the gravity of water droplets, so that water or other foreign matters can be prevented from splashing into the electronic oil pump when the vehicle is wading, thereby ensuring the normal working of the oil pump when the vehicle is in the working condition involving wading.

As a specific embodiment, the gas exhaust hole 2 includes an inclined section and a vertical section successively arranged from the inside of the sensor plug-in assembly 3, where the vertical section is close to the sensor plug-in assembly 3 and is perpendicular to the horizontal plane, and the inclined section is inclined upwards from the outlet end relative to the horizontal plane.

As a specific embodiment, with continued reference to FIG. 2, the oil pump has a joint surface 1 that is joined with the transmission case. To prevent a foreign matter, especially a large foreign matter, from entering the gas exhaust hole 2 and blocking the gas exhaust hole 2, a distance L from the outlet end of the gas exhaust hole 2 to the joint surface 1 is a preset distance, and specifically, the preset distance is 2 mm to 5 mm.

It should be noted that, in some other embodiments, the distance from the gas exhaust hole 2 to the joint surface 1 may further be adjusted based on a traveling condition of the vehicle, as long as the same function can be achieved.

As a specific embodiment, a waterproof base membrane 4 is further included, where the waterproof base membrane 4 has both waterproof and gas-permeable functions, and the waterproof base membrane 4 seals one end of the gas exhaust hole 2 close to the inside of the sensor plug-in assembly 3.

As a specific embodiment, the waterproof base membrane 4 is provided inside the sensor plug-in assembly 3, that is, the waterproof base membrane 4 seals an end portion of the vertical section located at the sensor plug-in assembly 3. The waterproof base membrane 4 arranged at a hole port inside the sensor plug-in assembly 3 ensures that heat generated by the working of the oil pump can be discharged, and a situation in which water is forced to flow back into the oil pump when undergoing serious wading can also be avoided, so that the inclined gas exhaust hole 2 and the waterproof base membrane 4 achieve a double protection effect for the oil pump when the vehicle is in a traveling condition involving serious wading, enabling the oil pump to always maintain optimal performance under a severe traveling condition of an automobile.

As a specific embodiment, the waterproof base membrane 4 is fixed to the inside of the sensor plug-in assembly 3 by adhesive bonding. The connection manner is simple, stable, and reliable, and is convenient for mounting, disassembly, and replacement.

It should be noted that, in some other embodiments, the waterproof base membrane 4 may further be fixed inside the sensor plug-in assembly 3 in another connection manner, as long as the same function can be achieved.

As a specific embodiment, the joint surface 1 of the oil pump is positioned on the transmission case by means of a pin hole, and is fixedly connected to the transmission case by means of a bolt. The connection manner is simple and reliable, and is easy to assemble.

As a specific embodiment, the oil pump is an internal gear pump, including an external gear, an internal gear, a crescent-shaped diaphragm, and a pump housing, where the external gear and the internal gear are both arranged in a cavity inside the pump housing, the external gear is a driving gear, the internal gear is a driven gear, and the crescent-shaped diaphragm separates the external gear from the internal gear.

In some other embodiments, the oil pump further includes an oil inlet and an oil outlet, where the oil inlet is used to suck hydraulic oil, and the oil outlet is used to discharge the hydraulic oil.

Accordingly, the embodiment of the present invention further provides a vehicle including the automatic transmission.

The embodiments of the present invention have the following beneficial effects:
1. according to the automatic transmission and the vehicle of the present invention, the gas exhaust hole is provided on the sensor plug-in assembly, and the exhaust hole is arranged as an inclined hole inclined upwards relative to the ground direction. On the one hand, the pressure generated during the working of the oil pump can be ensured to be discharged by means of the gas exhaust hole. On the other hand, when the vehicle is driven in a working condition involving wading or there is water splashing on the ground, the oil pump for the automatic transmission avoids an active "water retention" phenomenon due to the gravity of water droplets, so that water or other foreign matters can be prevented from splashing into the electronic oil pump when the vehicle is wading, thereby ensuring the normal working of the oil pump when the vehicle is in the working condition involving wading; and
2. according to the automatic transmission and the vehicle of the present invention, the waterproof base membrane arranged at a hole port inside the sensor plug-in assembly ensures that heat generated by the working of the oil pump can be discharged, and a situation in which water is forced to flow back into the electronic oil pump when undergoing serious wading can also be avoided, so that the inclined gas exhaust hole and the waterproof base membrane achieve a double protection effect for the electronic oil pump when the vehicle is in a traveling condition involving serious wading.

## Claims

1. An automatic transmission, comprising an oil pump gas-exhaust mechanism, the oil pump gas-exhaust mechanism comprising a sensor plug-in assembly (3) and an oil pump for supplying oil to the automatic transmission,
wherein the oil pump is fixedly connected to a transmission case, the sensor plug-in assembly (3) is arranged on a housing of the oil pump, the sensor plug-in assembly (3) is located between the oil pump and the transmission, the sensor plug-in assembly (3) is configured to be electrically connected to a sensor, and
the oil pump gas-exhaust mechanism further comprises a gas exhaust hole (2),
wherein the gas exhaust hole (2) is provided on the sensor plug-in assembly (3), and the gas exhaust hole (2) is inclined upwards from an outlet end relative to a horizontal plane.

2. The automatic transmission according to claim 1, wherein the gas exhaust hole (2) comprises a vertical section and an inclined section successively arranged from the inside of the sensor plug-in assembly (3), the vertical section is perpendicular to the horizontal plane, and the inclined section is inclined upwards from the outlet end relative to the horizontal plane.

3. The automatic transmission according to claim 1 or 2, wherein the oil pump has a joint surface (1) joined with the transmission case, and a distance from the outlet end of the gas exhaust hole (2) to the joint surface (1) is a preset distance being 2-5 mm.

4. The automatic transmission according to any one of claims 1 to 3, wherein a waterproof base membrane (4) is further comprised, wherein the waterproof base membrane (4) is provided inside the sensor plug-in assembly (3), and the waterproof base membrane (4) seals one end of the gas exhaust hole (2) closer to the inside of the sensor plug-in assembly (3) relative to the outlet end of the gas exhaust hole (2).

5. The automatic transmission according to claim 4, wherein the waterproof base membrane (4) is fixed to the inside of the sensor plug-in assembly (3) by adhesive bonding.

6. The automatic transmission according to any one of claims 3 to 5, wherein the joint surface (1) is positioned on the transmission case by means of a pin hole, and is fixedly connected to the transmission case by means of a bolt.

7. The automatic transmission according to any one of claims 1 to 6, wherein the oil pump is an internal gear pump, comprising an external gear, an internal gear, a crescent-shaped diaphragm, and a pump housing, wherein the external gear and the internal gear are both arranged in a cavity inside the pump housing, the external gear is a driving gear, the internal gear is a driven gear, and the crescent-shaped diaphragm separates the external gear from the internal gear.

8. The automatic transmission according to any one of claims 1 to 7, wherein the oil pump further comprises an oil inlet and an oil outlet, the oil inlet being used to suck hydraulic oil, and the oil outlet being used to discharge the hydraulic oil.

9. A vehicle, comprising the automatic transmission of claim 8.

## Patentansprüche

1. Automatikgetriebe, umfassend einen Ölpumpenabgasmechanismus, wobei der Ölpumpenabgasmechanismus eine Sensor-Steckbaugruppe (3) und eine Ölpumpe zur Versorgung des Automatikgetriebes mit Öl umfasst,
wobei die Ölpumpe fest mit einem Getriebegehäuse verbunden ist, die Sensor-Steckbaugruppe (3) an einem Gehäuse der Ölpumpe angeordnet ist, die Sensor-Steckbaugruppe (3) sich zwischen der Ölpumpe und dem Getriebe befindet, die Sensor-Steckbaugruppe (3) dazu eingerichtet ist, elektrisch mit einem Sensor verbunden zu sein, und
der Ölpumpenabgasmechanismus ferner ein Abgasloch (2) aufweist, wobei
das Abgasloch (2) an der Sensor-Steckbaugruppe (3) bereitgestellt ist und das Abgasloch (2) von einem Auslassende aus relativ zu einer horizontalen Ebene nach oben geneigt ist.

2. Automatikgetriebe nach Anspruch 1, wobei das Abgasloch (2) einen vertikalen Abschnitt und einen geneigten Abschnitt umfasst, die vom Inneren der Sensor-Steckbaugruppe (3) aus nacheinander angeordnet sind, der vertikale Abschnitt senkrecht zur horizontalen Ebene steht und der geneigte Abschnitt vom Auslassende aus relativ zur horizontalen Ebene nach oben geneigt ist.

3. Automatikgetriebe nach Anspruch 1 oder 2, wobei die Ölpumpe eine Verbindungsfläche (1) aufweist, die mit dem Getriebegehäuse verbunden ist, und ein Abstand vom Auslassende des Abgaslochs (2) zur Verbindungsfläche (1) ein voreingestellter Abstand von 2 bis 5 mm ist.

4. Automatikgetriebe nach einem der Ansprüche 1 bis 3, wobei ferner eine wasserdichte Basismembran (4) enthalten ist, wobei die wasserdichte Basismembran (4) innerhalb der Sensor-Steckbaugruppe (3) angeordnet ist und die wasserdichte Basismembran (4) ein Ende des Abgaslochs (2) abdichtet, das relativ zum Auslassende des Abgaslochs (2) näher am Inneren der Sensor-Steckbaugruppe (3) liegt.

5. Automatikgetriebe nach Anspruch 4, wobei die wasserdichte Basismembran (4) durch Klebebindung an dem Inneren der Sensor-Steckbaugruppe (3) befestigt ist.

6. Automatikgetriebe nach einem der Ansprüche 3 bis 5, wobei die Verbindungsfläche (1) mittels eines Stiftlochs auf dem Getriebegehäuse positioniert ist und mittels eines Bolzens fest mit dem Getriebegehäuse verbunden ist.

7. Automatikgetriebe nach einem der Ansprüche 1 bis 6, wobei die Ölpumpe eine Innenzahnradpumpe ist, die ein externes Zahnrad, ein internes Zahnrad, eine sichelförmige Scheidewand und ein Pumpengehäuse umfasst, wobei sowohl das externe Zahnrad als auch das interne Zahnrad in einem Hohlraum im Pumpengehäuse angeordnet ist, das externe Zahnrad ein antreibendes Zahnrad ist, das interne Zahnrad ein angetriebenes Zahnrad ist und die sichelförmige Scheidewand das externe Zahnrad vom internen Zahnrad trennt.

8. Automatikgetriebe nach einem der Ansprüche 1 bis 7, wobei die Ölpumpe ferner einen Öleinlass und einen Ölauslass aufweist, wobei der Öleinlass dazu verwendet wird, Hydrauliköl anzusaugen, und der Ölauslass dazu verwendet wird, das Hydrauliköl abzuleiten.

9. Fahrzeug mit dem Automatikgetriebe nach Anspruch 8.

## Revendications

1. Une boîte de vitesse automatique, comprenant un mécanisme d'échappement de gaz et une pompe à huile, le mécanisme d'échappement de gaz et la pompe à huile comprenant un ensemble capteur enfichable (3) et une pompe à huile pour l'alimentation en huile de la boîte de vitesse automatique,
dans laquelle la pompe à huile est fixée à un carter de transmission, l'ensemble capteur enfichable (3) est disposé sur un boîtier de la pompe à huile, l'ensemble capteur enfichable (3) est situé entre la pompe à huile et la boîte de vitesse, l'ensemble capteur enfichable (3) est configuré pour être connecté électriquement à un capteur, et
le mécanisme d'échappement de gaz et la pompe à huile comprenant en outre un orifice d'échappement de gaz (2), dans lequel
l'orifice d'échappement de gaz (2) est prévu sur l'ensemble capteur enfichable (3), et l'orifice d'échappement de gaz (2) est incliné vers le haut à partir d'une extrémité de sortie par rapport à un plan horizontal.

2. La boîte de vitesse automatique selon la revendication 1, dans laquelle l'orifice d'échappement de gaz (2) comprend une section verticale et une section inclinée disposées successivement à partir de l'intérieur de l'ensemble capteur enfichable (3), la section verticale est perpendiculaire au plan horizontal, et la section inclinée est inclinée vers le haut à partir de l'extrémité de sortie par rapport au plan horizontal.

3. La boîte de vitesse automatique selon la revendication 1 ou 2, dans laquelle la pompe à huile a une surface de jonction (1) reliée au carter de transmission, et une distance de l'extrémité de sortie de l'orifice d'échappement de gaz (2) jusqu'à la surface de jonction (1) est une distance prédéfinie de 2-5 mm.

4. La boîte de vitesse automatique selon l'une quelconque des revendications 1 à 3,dans laquelle une membrane de base étanche (4) est en outre comprise, dans laquelle la membrane de base étanche (4) est prévue à l'intérieur de l'ensemble capteur enfichable (3), et la membrane de base étanche (4) scelle une extrémité de l'orifice d'échappement de gaz (2) proche de l'intérieur de l'ensemble capteur enfichable (3) par rapport à l'extrémité de sortie de l'orifice d'échappement de gaz (2).

5. La boîte de vitesse automatique selon la revendication 4, dans laquelle la membrane de base étanche (4) est fixée à l'intérieur de l'ensemble capteur enfichable (3) par collage.

6. La boîte de vitesse automatique selon l'une quelconque des revendications 3 à 5, dans laquelle la surface de jonction (1) est positionnée sur le carter de transmission par l'intermédiaire d'un trou de goupille, et est connectée de manière fixe au carter de transmission au moyen d'un boulon.

7. La boîte de vitesse automatique selon l'une quelconque des revendications 1 à 6, dans laquelle la pompe à huile est une pompe interne à engrenages, comprenant un engrenage externe, un engrenage interne, un diaphragme en forme de croissant, et un boîtier de pompe, dans laquelle l'engrenage externe et l'engrenage interne sont tous deux disposés dans une cavité à l'intérieur du boîtier de pompe, l'engrenage externe est une roue menante, l'engrenage interne est une roue menée, et le diaphragme en forme de croissant sépare l'engrenage externe de l'engrenage interne.

8. La boîte de vitesse automatique selon l'une quelconque des revendications 1 à 7, dans laquelle la pompe à huile comprend en outre une entrée d'huile et une sortie d'huile, l'entrée d'huile étant utilisée pour aspirer l'huile hydraulique, et la sortie d'huile utilisée pour évacuer l'huile hydraulique.

9. Un véhicule, comprenant la boîte de vitesse automatique selon la revendication 8.
